Europäisches Patentamt

European Patent Office

Office européen des brevets

(19)

(11) Veröffentlichungsnummer: **0 191 366**
**B1**

(12) **EUROPÄISCHE PATENTSCHRIFT**

(45) Veröffentlichungstag der Patentschrift:
13.12.89

(51) Int. Cl.⁴: **H02K 29/08**

(21) Anmeldenummer: **86101179.9**

(22) Anmeldetag: **30.01.86**

(54) Antriebs- und Positioniersystem.

(30) Priorität: **12.02.85 DE 3504681**

(43) Veröffentlichungstag der Anmeldung:
**20.08.86 Patentblatt 86/34**

(45) Bekanntmachung des Hinweises auf die Patenterteilung:
**13.12.89 Patentblatt 89/50**

(84) Benannte Vertragsstaaten:
**AT BE CH DE FR GB IT LI NL SE**

(56) Entgegenhaltungen:
**EP-A- 0 150 070**
**DE-A- 2 305 163**
**US-A- 4 130 769**

(73) Patentinhaber: **Deutsche Forschungsanstalt für Luft-
und Raumfahrt e.V., Linder Höhe Postfach 90 60 58,
D-5000 Köln 90(DE)**

(72) Erfinder: **Ruppert, Udo, Dr., Ladiusstrasse 2,
D-1000 Berlin 37(DE)**

(74) Vertreter: **Moser, Herbert, Dr.-Ing., Nowackanlage 15,
D-7500 Karlsruhe1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Antriebs- und Positioniersystem bestehend aus einem mit Permanentmagneten bestückten Rotor und aus einem mindestens zwei Teilwicklungen aufweisenden Stator, wobei die Teilwicklungen mit einer von Rotorpositions-Sensoren zur Stromkommutierung gesteuerten elektronischen Spannungsversorgungsschaltung verbunden sind.

Ein Antriebsmotor der eingangs genannten Art ist in dem Prospekt der Firma Magnetic Technology von 1978 unter der Bezeichnung "Brushless DC Motors" dargestellt. Dabei handelt es sich um einen für verschiedene Anwendungsgebiete bestimmten Gleichstrom-Antriebsmotor, welcher einen permanentmagnetischen Rotor und einen geblechten Stator mit einer aus zwei Teilwicklungen bestehenden Statorwicklung aufweist. Durch entsprechend angeordnete Rotorpositions-Sensoren, die als Hall-Sensoren ausgebildet sein können, wird jeweils die aktuelle Rotorstellung festgestellt. Die elektronische Spannungsversorgungsschaltung kommutiert den von zwei Leistungsverstärkern gelieferten Speisestrom der beiden Teilspulen in Abhängigkeit von der festgestellten Rotorposition derart, daß eine fortgesetzte Drehbewegung entsteht.

Bei einem derartigen Antriebsmotor werden durch Hystereseeinflüsse im Eisenkreis des Stators und dessen relativ großer elektrischer Zeitkonstante die Einstellgenauigkeit der Drehbewegung und die Einhaltung einer vorgeschriebenen Sollwertposition verringert. Er weist ferner Sättigungs- und Wirbelstromerscheinungen im Weicheisen sowie bevorzugte mechanische Nullpositionen des Rotors auf. Dies führt zu Wechselstrom- bzw. Gleichstromverlusten.

Zum Stande der Technik gehört ferner ein bürstenloser Gleichstrommotor in eisenloser Ausführung des Stators, der in der Veröffentlichung A.R. Millner aus dem MIT Lincoln Laboratory, Lexington, Massachusetts vom Juni 1978 "A high-speed highefficiency permanent magnetic motor-generator" beschrieben wurde. Der mit einer Mehrzahl von sektorförmigen Permanentmagneten bestückte Rotor induziert in seiner Drehbewegung in der feststehenden Statorwicklung Signalspannungen, die zur Kommutierung des Statorstroms in einer elektronischen Spannungsversorgungsschaltung verwendet werden. Auch im Falle dieses bürstenlosen Motors ist nur eine dynamische Kommutierung während der Drehbewegung, jedoch keine Einregelung einer gewünschten statischen Sollwertposition möglich.

In der DE-AS 28 32 387 ist ein kollektorloser Gleichstrommotor mit axialem Luftspalt angegeben, welcher auf einer Rotorplatte in axialer Richtung magnetisierte Permanentmagnete in Verbindung mit einer Rotorrückschlußplatte aufweist. Der Stator besteht dabei aus zwei scheibenförmig übereinanderliegenden sternförmigen Antriebsspulen, die auf einer feststehenden magnetisierbaren Rückschlußplatte angeordnet sind. Zwei Hallgeneratoren bilden den Drehstellungsdetektor. Wegen der feststehenden magnetisierbaren Rückschlußplatte ist kein eisenfreier Stator vorhanden; vielmehr liegen magnetisierbare Werkstoffe im alternierenden Magnetfeld.

Die DD-PS 34 431 beschreibt einen flachen langsam laufenden Antriebsmotor zum unmittelbaren Antrieb von Schwungmassen. Der Stator weist mehrere etwa trapezförmige Flachspulen auf. Rotorpositions-Sensoren sind dabei nicht vorhanden. Als Stromwender kann ein elektronischer Schalter verwendet werden, der in vorgegebener Frequenz die feststehenden Spulen nacheinander steuert. Alternativ wird die Stromkommutierung über einen Kollektor in Verbindung mit Schleif- und Segmentrigen bewirkt.

Die Erfindung geht von der Aufgabenstellung aus, ein in weitem Anwendungsbereich, insbesondere auch zum Tieftemperatureinsatz geeignetes Antriebs- und Positioniersystem zu schaffen, welches die verlustarme Einregelung beliebiger extrem stabiler unbegrenzter Sollwert-Drehwinkel ermöglicht. Das Antriebssystem soll dabei jede vorgegebene Sollwertposition mit hoher Genauigkeit einhalten, in dieser keine Energie verbrauchen und bereits bei geringen Abweichungen von der Sollwertposition, die eine Ruheposition oder eine Position der Bewegung sein kann, das maximale Drehmoment abgeben. Das Antriebssystem soll ferner auch hohe Drehzahlen bei geringen Verlusten ermöglichen.

Das Kennzeichnende der Erfindung wird bei einem Antriebs- und Positioniersystem der eingangs genannten Art darin gesehen, daß der Stator eisenfrei ausgebildet ist, und daß die in parallelen Ebenen liegenden scheibenförmigen Teilwicklungen des Stators überlappend derart angeordnet sind, daß die freien Innenräume der Teilspulen jeweils durch Stegteile von anderen Teilspulen vollständig ausgefüllt sind, wobei das von den Teilspulen erzeugte, von den Teilspulen umfaßte magnetische Feld im wesentlichen parallel zu dem von den Permanentmagneten erzeugten magnetischen Feld liegt, und daß die Rotorpositions-Sensoren in die Teilwicklungen integriert sind.

Ein solcher eisenfreier Aufbau des Antriebssystems ergibt in Verbindung mit einer geeigneten elektronischen Spannungsversorgungs- und Steuerschaltung eine exakte Rotorpositionierung in beliebigen Sollwert-Drehwinkeln β. Auch nach Einnahme einer vorgeschriebenen Ruheposition ist eine exakte Einregelung dieser Sollwertposition mit hoher Haltekraft möglich. Der Rotor verhält sich während seiner Drehbewegung und in der geregelten Sollwertposition praktisch magnetisch eingerastet, wobei jeder Auslenkung aus der vorgeschriebenen Bewegungs- oder Rastlage starke magnetische Kräfte entgegenwirken. Der angegebene eisenfreie Aufbau ermöglicht eine extrem genaue verlustarme Steuerung und ergibt eine Leistungsaufnahme, die nur von der Sollwert-Abweichung abhängt.

Rotorpositions-Sensoren sind dabei Sensoren, welche vom Magnetfeld abhängige Signale erzeugen. Bevorzugt ist die Verwendung von Rotorpositions-Sensoren, die sowohl die Größe als auch das Vorzeichen des magnetischen Feldes bestimmen und elektrische Ausgangssignale abgeben.

Ferner kann es zweckmäßig sein, in bekannter Weise als Rotorpositions-Sensoren Hall-Sensoren zu wählen. Dadurch ergeben sich günstige Eingangsgrößen für die elektrische Spannungsversorgungs- und Steuerschaltung.

Die Zahl der Rotorpositions-Sensoren soll vorteilhaft so gewählt werden, daß außer der für die Kommutierung nötigen Positionsermittlung auch eine zusätzliche Erkennung der Rotorstellung und somit eine für die Regelschaltung zusätzlich auswertbare Kennzeichnung des Rotorbewegungsvorganges möglich ist. Bei zwei Teilwicklungen lassen sich die erforderlichen Informationen mit einer Mindestanzahl von zwei Rotorpositions-Sensoren erlangen, d.h. die Zahl der Sensoren entspricht mindestens der Anzahl der Teilwicklungen. Bei Anordnungen mit mehr als zwei Teilwicklungen können jedoch die erforderlichen Signalwerte auch mit einer der Anzahl der Teilwicklungen entsprechenden Sensorzahl oder mit einer geringeren Anzahl von Sensoren ermittelt werden.

Bei einer bevorzugten Ausführungsform sind vier Rotorpositions-Sensoren in Verbindung mit einer aus zwei Teilwicklungen bestehenden Statorwicklung vorgesehen, und jeder Rotorpositions-Sensor ist gegenüber dem Nachfolgenden in Winkelrichtung um

$$\frac{\pi}{2n}$$

versetzt angeordnet. "n" bezeichnet die Anzahl der von den Permanentmagneten erzeugten Polpaare, welche den Luftspalt bestimmen, in dem die Teilwicklungen des Stators liegen. In genauer Darstellung beträgt die Winkelversetzung.

$$(1 + 4m) \cdot \frac{\pi}{2n},$$

wobei m = 0,1,2,3...beliebige ganzzahlige Werte annehmen kann.

Die Erzeugung der am Luftspalt gegenüberliegenden Polpaare kann in verschiedener Weise, insbesondere durch gegenüberliegende scheibenförmige Permanentmagnete oder durch Polschuhe eines Eisenkreises erzeugt werden, welcher einen oder mehrere Permanentmagnete enthält.

In der konstruktiven Ausführung erscheint es zweckmäßig, daß der Rotor aus einem ferromagnetischen ringförmigen Trägerkörper mit U-förmigem Querschnitt besteht, auf dessen einander zugewandten inneren Flächen der Schenkel eine Mehrzahl von durch Permanentmagneten erzeugten Polpaaren liegen, welche den Luftspalt bestimmen, in dem die Teilwicklungen des Stators liegen. Dabei kann der U-förmige Querschnitt des Trägerkörpers zweckmäßig einander zugewandte koaxial zur Drehachse liegende Ringflächen oder einander zugewandte konzentrisch zur Drehachse liegende Zylinderflächen bilden. Die Ausbildung des Trägerkörpers mit parallelen Ringflächen ergibt eine Flachbauweise, wie sie für verschiedene Anwendungsbereiche zweckmäßig ist.

Obwohl der angegebene grundsätzliche Aufbau des Antriebssystems mit verschiedenen elektronischen Spannungsversorgungsschaltungen kombiniert werden kann, erscheint die nachfolgend beschriebene Schaltungsanordnung besonders günstig und ermöglicht eine einwandfreie magnetisch gerastete Führungsbewegung des Rotors und eine genaue Einsteuerung vorgeschriebener Sollwertpositionen.

Eine solche elektronische Spannungsversorgungsschaltung kann bei zwei Teilwicklungen zweckmäßig so ausgebildet sein, daß die Ausgangssignale von mindestens zwei Rotorpositions-Sensoren zugeordneten ersten Multipliziergliedern zugeführt und mit aus dem Soll-Drehwinkel β des Rotors abgeleiteten Signalwerten multipliziert werden, und daß die Teilwicklungen mit zugeordneten Leistungsverstärkern verbunden sind, deren Eingänge mit zweiten Multipliziergliedern in Verbindung stehen, die mit den Ausgangssignalen von zwei Rotorpositions-Sensoren und mit weiteren Eingangssignalen gespeist werden, wobei die weiteren Eingangssignale durch Summierglieder aus den Ausgangssignalen der ersten Multiplizierglieder gebildet sind.

Diese Spannungsversorgungsschaltung ist Gegenstand einer anderen europäischen Patentanmeldung.

In einer praktisch erprobten Schaltung werden vier Rotationspositions-Sensoren verwendet, die jeweils um den Winkel

$$\frac{\pi}{2n}$$

versetzt angeordnet sind. Eine konstante Drehung des Rotors ergibt beispielsweise einen sinusförmigen Verlauf des mit den Polpaaren rotierenden Feldes und feldproportionale sinusförmige Hall-Sensorsignale, wobei die Signale untereinander jeweils um den Winkel π/4 verschoben sind. Dadurch entstehen folgende Hall-Sensorsignale $U_{H1}, U_{H2}, U_{H3}, U_{H4}$ in Abhängigkeit vom relativen Drehwinkel α des Rotors:

$$U_{H_1} = C \cdot \sin\left(\frac{n\alpha}{2}\right)$$

$$U_{H_3} = C \cdot \sin\left(\frac{n\alpha}{2} + \pi/4\right)$$

$$U_{H_2} = C \cdot \sin\left(\frac{n\alpha}{2} + \pi/2\right)$$

$$U_{H_4} = C \cdot \sin\left(\frac{n\alpha}{2} + \frac{3}{4}\pi\right)$$

C bedeutet eine Zahlenwertkonstante.

Die Ausgangssignale der vier Hall-Sensoren $U_{H1}, U_{H2}, U_{H3}, U_{H4}$ werden je einem zugeordneten ersten Multiplizierglied zugeführt und dort mit verschiedenen Signalwerten a,b,c und d multipliziert, wobei a,b,c und d als Funktionen des Soll-Drehwinkels $\beta$ folgende Größen Aufweisen:

$$a = \cos\left(\frac{n\beta}{2}\right)$$

$$c = \cos\left(\frac{n\beta}{2} + \pi/4\right)$$

$$b = \cos\left(\frac{n\beta}{2} + \pi/2\right)$$

$$d = \cos\left(\frac{n\beta}{2} + \frac{3}{4}\pi\right)$$

Solange der aktuelle Drehwinkel $\alpha$ vom Soll-Drehwinkel $\beta$ abweicht, liefert die Spannungsversorgungsschaltung daher, unter Berücksichtigung des Drehsinnes, über die den entsprechenden Teilwicklungen zugeordneten Leistungsverstärker Lastströme. Das von den angesteuerten Teilwicklungen erzeugte Magnetfeld versucht, die Regelabweichung zu verkleinern.

Anstelle der Hall-Sensoren können auch andere geeignete Elemente zur Positionserkennung angewendet werden. Statt einer Abtastung durch zweckmäßig in die Teilwicklungen integrierte Rotorpositions-Sensoren kann gegebenenfalls auch eine andere Anordnung vorteilhaft sein, bei der die Rotorpositions-Signale von einem zusätzlichen separaten Permanentmagnetsystem bzw. von anderen Gebersystemen erzeugt werden.

In Verbindung mit der beschriebenen elektronischen Spannungsversorgungsschaltung ergibt die mit eisenfreiem Stator aufgebaute und in parallelen Ebenen liegende scheibenförmige Teilwicklungen des Stators aufweisende Antriebseinheit eine einwandfreie Positionierung des mit der Antriebseinheit, z.B. mit dem Trägerkörper, verbundenen anzutreibenden Bauteils. Durch die magnetische Rastung in der Führungsbewegung des Rotors können auch bei niedrigen Drehzahlen und im Stillstand hohe Kräfte auf den anzutreibenden Bauteil übertragen werden, welche dessen Führung in der vorgeschriebenen Zeitfunktion des Soll-Drehwinkels erzwingen.

In der Zeichnung sind Ausführungsbeispiele des Gegenstandes der Erfindung schematisch dargestellt; es zeigen:

Fig. 1 eine abgewickelte Darstellung von Rotor und Statorwicklung mit den Hall-Sensorsignalen als Funktion des Drehwinkels $\alpha$,

Fig. 2 eine Darstellung des zeitlichen Verlaufs der Hall-Sensorsignale aus Fig. 1 bei konstanter Drehbewegung,

Fig. 3 ein Blockschaltbild zur Verarbeitung der aus Fig. 1 bzw. Fig. 2 abgeleiteten Hall-Sensorsignale,

Fig. 4 eine Ausführungsform, bei der die Polpaare auf Ringflächen des Rotors angeordnet sind,

Fig. 5 eine Ausführungsform, bei der die Polpaare auf Zylinderflächen des Rotors angeordnet sind.

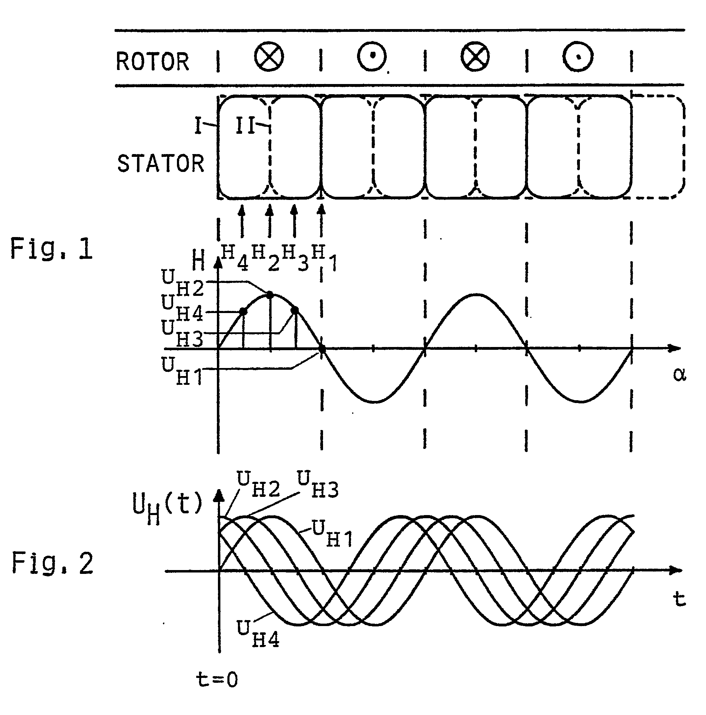

In Fig. 1 sind im oberen Teil unterhalb der Pole $\otimes$, $\odot$ des Rotors zwei gegeneinander versetzte Teilwicklungen I,II erkennbar. Die Teilwicklungen sind dabei vorteilhaft derart überlappend auszuführen, daß der freie Innenraum der Teilspulen der einen Teilwicklung nahezu vollständig von den Stegteilen der Teilspulen der anderen Teilwicklung ausgefüllt ist. Dadurch wird eine günstige Ausnutzung des freien Spuleninnenraums erzielt. Die in die Teilwicklungen integrierten Hall-Sensoren $H_1,H_3,H_2,H_4$ befinden sich relativ zu den Teilwicklungen bzw. deren Teilspulen in den angegebenen Positionen. Im unteren Teil der Fig. 1 ist der Verlauf der von den Rotorpolen erzeugten magnetischen Feldstärke, und zwar im statischen Falle, zur Zeit T = 0 dargestellt. Es ergeben sich Hall-Sensorsignale entsprechend dem sinusförmigen Kurvenverlauf der Feldstärke als Funktion des Drehwinkels $\alpha$.

Fig. 2 zeigt die im dynamischen Fall, und zwar bei einer Drehbewegung des Rotors mit konstanter Drehzahl, jeweils als Zeitfunktion auftretenden sinusförmigen Hall-Sensorsignale.

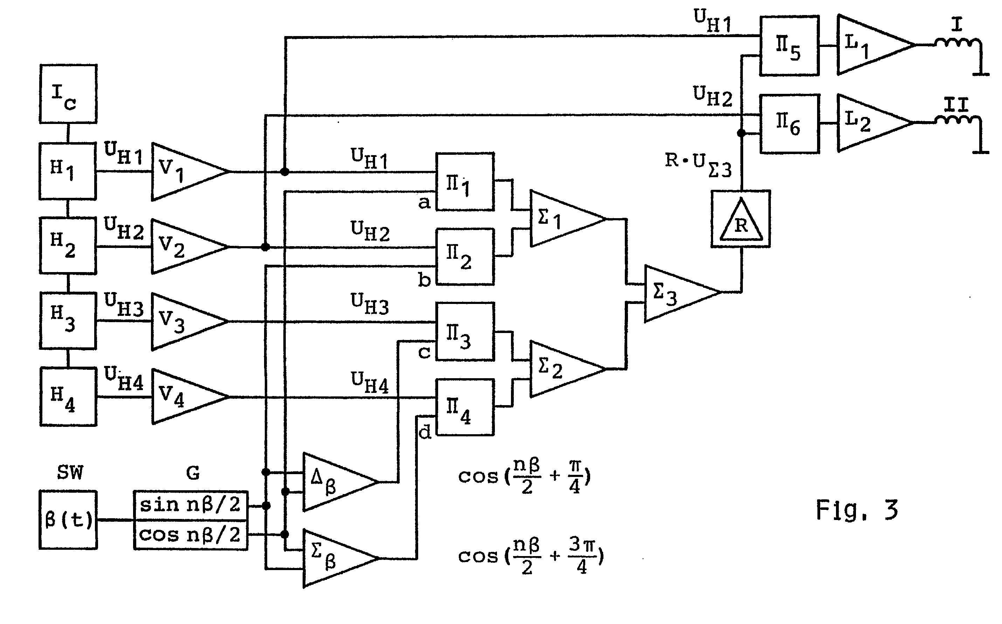

Die weitere Verarbeitung der Hall-Sensorsignale zeigt das Blockschaltbild nach Fig. 3 Zur Konstantstromspeisung der vier Hall-Sensoren $H_1,H_2,H_3,H_4$ ist eine Konstantstromquelle $I_C$ vorgesehen.

Die vier Hall-Sensorsignale $U_{H1},U_{H2}$, $U_{H3},U_{H4}$ werden nach entsprechender Verstärkung durch nachgeschaltete Verstärker $V_1,V_2,V_3$ und $V_4$ ersten Multipliziergliedern $\pi_1,\pi_2,\pi_3,\pi_4$ zugeführt und mit verschiedenen Signalen a,b,c,d so multipliziert, daß an den Ausgängen der Multiplizierglieder die Signale $a \cdot U_{H1}, b \cdot U_{H2}$, $c \cdot U_{H3}$ und $d \cdot U_{H4}$ entstehen.

Die Signale a,b,c,d sind Funktionen des vorgebbaren Sollwinkels $\beta$ und werden aus den Funktionen sin

$$\frac{n}{2}\beta$$

und cos

$$\frac{n}{2}\beta$$

so erzeugt, daß nachfolgende Beziehungen gelten:

$$a = \cos\left(\frac{n\cdot\beta}{2}\right)$$

$$c = \cos\left(\frac{n\cdot\beta}{2} + \pi/4\right)$$

$$b = \cos\left(\frac{n\cdot\beta}{2} + \pi/2\right)$$

$$d = \cos\left(\frac{n\cdot\beta}{2} + \frac{3}{4}\pi\right)$$

Anschließend werden die Ausgangssignale der ersten Multiplizierglieder über Summierglieder $\Sigma_1, \Sigma_2, \Sigma_3$ summiert, und die Gesamtsumme wird über einen Regelverstärker R den beiden zweiten Multipliziergliedern $\pi_5$ und $\pi_6$ zugeführt, an denen auch die Hall-Sensorsignale $U_{H1}$ und $U_{H2}$ direkt anstehen. Aus dem Produkt von $U_{H1}$ und dem R entsprechend verstärktem Gesamtsummensignal aus $\Sigma_3$ wird das Ansteuersignal für den ersten Leistungsverstärker $L_1$ gebildet, welcher mit der Teilwicklung I in Verbindung steht. In gleicher Weise erfolgt die Erzeugung des Ansteuersignals für den zweiten Leistungsverstärker $L_2$ zur Speisung der Teilwicklung II durch das zweite Multiplizierglied $\pi_6$ als Produkt aus dem Hall-Sensorsignal $U_{H2}$ und dem über den Regelverstärker R verstärkten Summensignal $\Sigma_3$.

Für die Verstärker $V_1, V_2, V_3$ und $V_4$ sind rauscharme, stabile schnelle Proportionalverstärker auszuwählen. Mit Hilfe des Regelverstärkers R kann die Auswirkung des Summenausgangssignals $\Sigma_3$ in den jeweils in den zweiten Multipliziergliedern $\pi_5$ und $\pi_6$ zu bildenden Produkten festgelegt werden.

Der vorgegebene Sollwinkel $\beta$ der Rotordrehung wird an einem Sollwertgeber SW eingestellt. Hierbei kann der Sollwinkel $\beta$ als Zeitfunktion ausgebildet sein. Im einfachsten Fall können an einem Spannungsteiler einem bestimmten Sollwinkel entsprechende Spannungen abgegriffen werden.

Für eine Bewegung ist $\beta = f(t)$ bzw. bei einer konstanten Dauerdrehung wird $\beta(t) = 2\pi\cdot\gamma\cdot t$, wobei die Drehzahl $2v/n$ ist und $v$ die Oszillationsfrequenz der Signale a,b,c,d darstellt. Aus dem vorgegebenen Sollwinkel $\beta$ werden in einer Recheneinheit G sin

$$\frac{n\cdot\beta}{2}$$

und cos

$$\frac{n\cdot\beta}{2}$$

gebildet und einem Summierverstärker $\Sigma\beta$ sowie einem Differenzverstärker $\Delta\beta$ zugeleitet. Diese erzeugen die eine Eingangsgröße der ersten Multiplizierglieder $\pi_3$ und $\pi_4$. Die zweite Eingangsgröße wird jeweils durch die Hall-Sensorsignale $U_{H3}$ und

$U_{H4}$ gebildet. Damit liegen an den einen Eingängen der ersten Multiplizierglieder $\pi_1, \pi_2, \pi_3, \pi_4$ die im vorangegangenen angegebenen Signale a,b,c,d. Die Ausgangssignale des Summierverstärkers $\Sigma\beta$ und des Differenzverstärkers $\Delta\beta$ sind cos

$$\left(\frac{n\cdot\beta}{2} + \pi/4\right)$$

und cos

$$\left(\frac{n\cdot\beta}{2} + \frac{3}{4}\pi\right),$$

also c und d.

Bei dieser Schaltungsanordnung wird mit den vier Hall-Sensoren der momentane lokale Feldverlauf relativ zu einer Teilspule der Teilwicklungen abgetastet und mit dem theoretischen Sollkurvenverlauf, gewonnen aus dem Sollwinkel $\beta$, verglichen. Die Teilwicklungen I,II werden durch die Steuerelektronik so angesteuert, daß im Gleichgewichtszustand beide Kurvenzüge möglichst übereinstimmen. Auf diese Weise folgt der Drehwinkel $\alpha$ des Rotors dem jeweils vorgegebenen Sollwinkel $\beta$, der konstant oder eine vorgebbare Sollfunktion der Zeit sein kann. Da die Abtastung durch die Hall-Sensoren mit praktisch unendlicher Auflösung erfolgt, kann jeder beliebige Drehwinkel $\alpha$ des Rotors mit großer Auflösung eingestellt oder es können auch exakt geführte Bewegungen vorgenommen werden, da bei der geringsten Abweichung des Drehwinkels $\alpha$ vom momentanen Sollwinkels $\beta$ sofort das maximale Drehmoment zur Nachführung erzeugt wird.

Der Rotor befindet sich damit stets in einem elektrodynamisch eingerasteten Zustand, wobei die Lage der Raststellung elektronisch eingestellt und verschoben werden kann. Die Raststellung kann auch kontinuierlich mit konstanter Geschwindigkeit umlaufen, wodurch beliebig kleine Drehzahlen mit vollem Drehmoment erzeugt werden können. Diese durch den besonderen eisenfreien Aufbau der Teilspulen des Antriebssystems in Verbindung mit der speziellen Spannungsversorgungsschaltung hervorgerufene elektro-dynamische Einrastung übertrifft die mechanische Rastung an Genauigkeit, Reproduzierbarkeit und Lebensdauer. Da der Rotor keine bevorzugte mechanische Nullposition hat, wird elektrische Leistung im wesentlichen nur dann verbraucht, wenn auslenkende Kräfte aus der Sollposition einwirken.

Die absolute Rotorstellung ist zunächst

$$\frac{n}{2} -$$

deutig.

Wird das vorgewählte maximale Drehmoment überschritten, rastet der Antrieb aus und kann in eine andere der möglichen am Umfang verteilten

$$\frac{n}{2}$$

Raststellungen einfallen. Bei Anwendungen, bei denen dies unzulässig erscheint, läßt sich durch bekannte elektronische Zusatzmaßnahmen (Identifizierung, Abzählen der Rastzustände) oder durch Einbau eines Permanentmagnet-Systems mit n = 2 die absolute Eindeutigkeit erzielen. Außerdem kann das Antriebssystem wie jeder andere Antrieb durch externe Positionsrückmeldung in normaler Servofunktion betrieben und auch in eine ungeregelte Motorfunktion überführt werden. Die Kombination mit anderen analogen oder digitalen Encodern ist möglich.

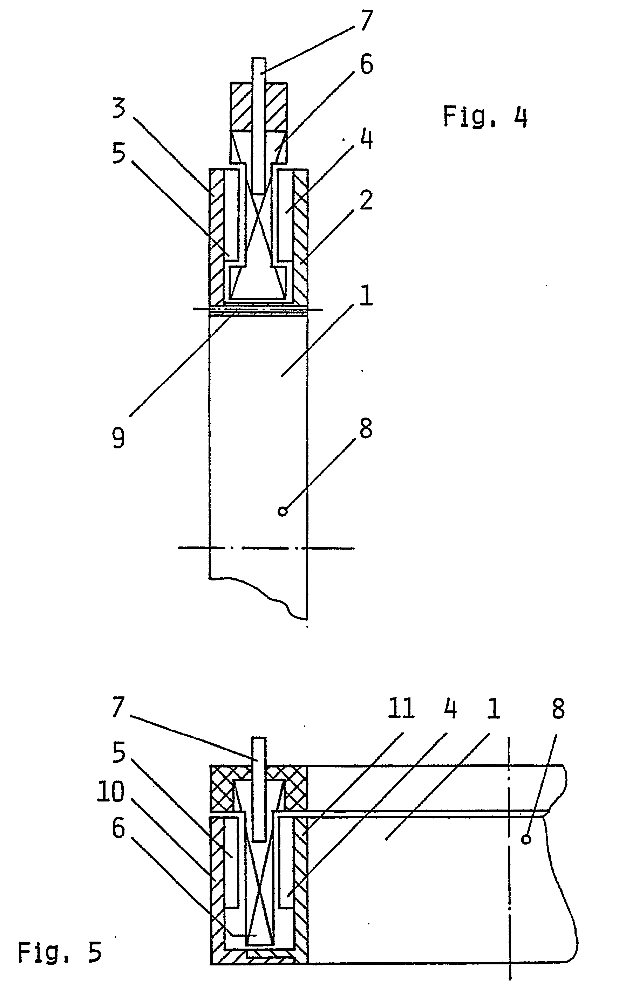

Die Fig. 4 und 5 zeigen zwei mögliche konstruktive Ausführungsformen des Antriebssystems. In Fig. 4 ist ein spulenkörperförmiger ferromagnetischer Trägerkörper 1 des Rotors vorgesehen, welcher zwei Ringscheibenteile 2,3 trägt, auf deren Innenflächen Permanentmagnete zur Bildung der Polpaare 4,5 angeordnet sind. In den von den Polpaaren 4,5 und den Ringscheiben 2,3 gebildeten Luftspalt greift eine eisenfreie, feststehende scheibenförmige Statorwicklung 6 mit I-Querschnitt ein. Diese enthält die mit Gießharz vergossenen Teilspulen der beiden Teilwicklungen I,II sowie die in ihrer Lage einstellbaren Hall-Sensorträger 7. Der anzutreibende Wellenteil wird unmittelbar in die Mittelausnehmung 8 des Trägerkörpers 1 eingesetzt und mit diesem drehfest verbunden. In der gezeigten Ausführung dient ein Arretierstift 9 zur drehfesten Fixierung der beiden Ringscheibenteile 2,3.

Bei der Ausführungsform nach Fig. 5 bildet der Trägerkörper 1 zwei konzentrisch liegende Zylinderringflächen 10,11 welche die Polpaare 4,5 tragen. Die Statorwicklung 6 ist in dieser Ausführung ebenfalls eisenfrei mit T-Querschnitt, jedoch zylinderförmig ausgebildet. Die in ihrer Lage einstellbaren Hall-Sensorträger 7, und damit die Hall-Sensoren, sind in die in Kunstharz vergossenen Teilwicklungen integriert.

Als wesentliches Erfindungsmerkmal ist anzusehen, daß die Positions-Sensoren jeweils in beide Teilwicklungen integriert sind. Hierdurch wird eine besonders günstige Signalform der durch die Permanentmagnete in den Positions-Sensoren erzeugten Signale erreicht. Im vorliegenden Ausführungsbeispiel ist dies durch die überlappende Anordnung der Teilwicklungen in parallelen Ebenen gegeben. Bei dieser Anordnung lassen sich außerdem die Positions-Sensoren in Bezug auf die Teilwicklungen so positionieren, daß die Rückwirkung der Teilwicklungen auf die ihnen durch die elektrische Steuerschaltung zugeordneten Positions-Sensoren gering bleibt.

## Patentansprüche

1. Antriebs- und Positioniersystem bestehend aus einem mit Permanentmagneten bestückten Rotor und aus einem mindestens zwei Teilwicklungen (I, II) aufweisenden Stator, wobei die Teilwicklungen mit einer von Rotorpositions-Sensoren (7) zur Stromkommutierung gesteuerten, elektronischen Spannungsversorgungsschaltung verbunden sind, **dadurch gekennzeichnet**, daß der Stator eisenfrei ausgebildet ist, und daß die in parallelen Ebenen liegenden Scheibenförmigen Teilwicklungen (I,II) des Stators überlappend derart angeordnet sind, daß die freien Innenräume der Teilspulen jeweils durch Stegteile von anderen Teilspulen vollständig ausgefüllt sind, wobei das von den Teilwicklungen erzeugte, von den Teilspulen umfaßte magnetische Feld im wesentlichen parallel zu dem von den Permanentmagneten erzeugten magnetischen Feld liegt, und daß die Rotorpositions-Sensoren (7) jeweils in beide Teilwicklungen (I,II) integriert sind.

2. System nach Anspruch 1, **dadurch gekennzeichnet**, daß die Rotorpositions-Sensoren Hall-Sensoren (7) sind.

3. System nach Anspruch 1, **dadurch gekennzeichnet**, daß die Zahl der Rotorpositions-Sensoren (7) größer ist als die Anzahl der Teilwicklungen (I,II).

4. System nach Anspruch 1, **dadurch gekennzeichnet**, daß vier Rotorpositions-Sensoren (7) in Verbindung mit einer aus zwei Teilwicklungen (I,II) bestehenden Statorwicklung (6) vorgesehen und jeweils um den Winkel

$$\frac{\pi}{2n}$$

versetzt angeordnet sind, wobei "n" die Anzahl der von den Permanentmagneten erzeugten Polpaare (4,5) bezeichnet, welche den Luftspalt bestimmen, in dem die Teilwicklungen (I,II) des Stators liegen.

5. System nach Anspruch 1, **dadurch gekennzeichnet**, daß der Rotor aus einem ferromagnetischen ringförmigen Trägerkörper (1) mit U-förmigem Querschnitt besteht, auf dessen einander zugewandten inneren Flächen der Schenkel eine Mehrzahl von durch die Permanentmagnete erzeugten Polpaare (4,5) liegen, welche den Luftspalt bestimmen, in den die Teilwicklungen (I,II) des Stators eingreifen.

6. System nach Anspruch 5, **dadurch gekennzeichnet**, daß der U-förmige Querschnitt des Trägerkörpers (1) einander zugewandte koaxial zur Drehachse liegende Ringflächen bildet.

7. System nach Anspruch 5, **dadurch gekennzeichnet**, daß der U-förmige Querschnitt des Trägerkörpers (1) einander zugewandte konzentrisch zur Drehachse liegende Zylinderflächen bildet.

8. Antriebs- und Positioniersystem nach Anspruch 1, **dadurch gekennzeichnet**, daß in die elektrische Spannungsversorgungsschaltung bei zwei Teilwicklungen (I,II) die Ausgangssignale $(U_{H1}, U_{H2}, U_{H3}, U_{H4})$ von mindestens zwei Rotorpositions-Sensoren (7) zugeordneten ersten Multiplizierschaltungen $(\pi_1, \pi_2, \pi_3, \pi_4)$ zugeführt und mit aus dem Soll-Drehwinkel des Rotors abgeleiteten Signalwerten multipliziert werden, und daß die Teilwicklungen (I,II) mit zugeordneten Leistungsverstärkern $(L_1, L_2)$ verbunden sind, deren Eingänge mit zweiten Multipliziergliedern $(\pi_5, \pi_6)$ in Verbindung stehen, die mit den Ausgangssignalen $(U_{H1}, U_{H2})$ von zwei Rotorpositions-Sensoren (7) und mit weiteren Eingangssignalen gespeist werden, wobei die weiteren Eingangssignale durch Summierglieder $(\Sigma_1, \Sigma_2, \Sigma_3)$ aus den Ausgangssignalen der ersten Multiplizierglieder $(\pi_1, \pi_2, \pi_3, \pi_4)$ gebildet sind.

9. System nach Anspruch 8, **dadurch gekennzeichnet**, daß vier Rotorpositions-Sensoren (7) angebracht sind.

**Claims**

1. Driving and positioning system consisting of a rotor equipped with permanent magnets and of a stator with at least two part-windings (I, II), the part windings being connected to an electronic voltage-supply circuit controlled by rotor-position sensors (7) for current commutation, characterised in that the stator is nonferrous, and the disk-shaped part-windings (I, II) of the stator, which are located in parallel planes, are overlapped in such a way that each of the free areas inside the coil sections is completely filled by web sections of other coil sections, the magnetic field generated by the part-windings and surrounded by the coil sections being essentially parallel to the magnetic field generated by the permanent magnets, and each of the rotor-position sensors (7) is integrated in both part-windings (I, II).

2. System according to claim 1, characterised in that the rotor-position sensors are Hall sensors (7).

3. System according to claim 1, characterised in that the number of rotor-position sensors (7) is greater than the number of part-windings (I, II).

4. System according to claim 1, characterised in that four rotor-position sensors (7) in conjunction with a stator winding (6) comprising two part-windings (I, II) are provided and disposed offset by the angle $\pi/2n$, "n" being the number of pairs of poles (4, 5) which are generated by the permanent magnets and determine the air gap in which the part-windings (I, II) of the stator are located.

5. System according to claim 1, characterised in that the rotor comprises an annular ferromagnetic support (1) with a U-shaped cross-section, on the inner opposing surfaces of the legs of which there is disposed a plurality of pole pairs (4, 5) which are generated by the permanent magnets and determine the air gap into which the part-windings (I, II) of the stator engage.

6. System according to claim 5, characterised in that the U-shaped cross-section of the support (1) forms annular surfaces which face each other and are coaxial to the axis of rotation.

7. System according to claim 5, characterised in that the U-shaped cross-section of the support (1) forms cylindrical surfaces which face each other and are concentric with the axis of rotation.

8. Driving and positioning system according to claim 1, characterised in that in the electric voltage-supply circuit with two part-windings (I, II), the output signals (UH1, UH2, UH3, UH4) of at least two rotor-position sensors (7) are supplied to associated first multipliers ($\pi1$, $\pi2$, $\pi3$, $\pi4$) and are multiplied with signal values derived from the setpoint angle of rotation of the rotor, and the part-windings (I, II) are connected to associated power amplifiers (L1, L2) whose inputs are connected to second multipliers ($\pi5$, $\pi6$) to which the output signals (UH1, UH2) of two rotor-position sensors (7) and further input signals are supplied, the further input signals being formed by summing elements ($\Sigma1$, $\Sigma2$, $\Sigma3$) from the output signals of the first multipliers ($\pi1$, $\pi2$, $\pi3$, $\pi4$).

9. System according to claim 8, characterised in that four rotor-position sensors (7) are fitted.

**Revendications**

1. Système d'entraînement et de positionnement comprenant un rotor équipé d'aimants permanents et un stator avec au moins deux enroulements partiels (I, II), les enroulements partiels étant reliés à un circuit électronique d'alimentation en courant commandé par des détecteurs de position du rotor (7) en vue de la commutation du courant, caractérisé en ce que le stator est à noyau d'air, que les enroulements partiels (I, II) en forme de disques du stator situés dans des plans parallèles se recouvrent de telle façon que les espaces intérieurs libres des bobines partielles sont respectivement remplis complètement par des éléments de barrette d'autres bobines partielles, le champ magnétique créé par les enroulements partiels et entouré par les bobines partielles est sensiblement parallèle au champ magnétique créé par les aimants permanents, et que les détecteurs de position de rotor (7) sont respectivement intégrés dans les deux enroulements partiels (I, II).

2. Système selon la revendication 1, caractérisé en ce que les détecteurs de position de rotor sont des détecteurs Hall (7).

3. Système selon la revendication 1, caractérisé en ce que le nombre des détecteurs de position de rotor (7) est plus grand que le nombre des enroulements partiels (I, II).

4. Système selon la revendication 1, caractérisé en ce que quatre détecteurs de position de rotor (7) sont prévus, en combinaison avec un enroulement de stator (6) composé de deux enroulements partiels (I, II), et décalés respectivement de l'angle $\pi/2n$, "n" indiquant le nombre des paires de pôles (4, 5) créées par les aimants permanents qui déterminent l'entrefer dans lequel se situent les enroulements partiels (I, II) du stator.

5. Système selon la revendication 1, caractérisé en ce que le rotor se compose d'un corps de support annulaire ferromagnétique (1) avec une section transversale en U dont les faces intérieures des branches dirigées l'une vers l'autre présentent une pluralité de paires de pôles (4, 5) créées par les aimants permanents qui déterminent l'entrefer dans lequel sont placés les enroulements partiels (I, II) du stator.

6. Système selon la revendication 5, caractérisé en ce que la section transversale en U du corps de support (1) forme des surfaces annulaires dirigées l'une vers l'autre et placées coaxialement à l'axe de rotation.

7. Système selon la revendication 5, caractérisé en ce que la section transversale en U du corps de support (1) forme des surfaces cylindriques dirigées l'une vers l'autre et placées coaxialement à l'axe de rotation.

8. Système selon la revendication 1, caractérisé en ce que, dans le circuit d'alimentation en courant électrique avec deux enroulements partiels (I, II), les signaux de sortie ($U_{H1}$, $U_{H2}$, $U_{H3}$, $U_{H4}$) d'au moins deux détecteurs de position de rotor (7) sont transmis à des premiers multiplicateurs associés ($\pi_1$, $\pi_2$, $\pi_3$, $\pi_4$) et multipliés par des valeurs de signaux dérivées de l'angle de rotation de consigne du rotor, et que les enroulements partiels (I, II) sont reliés à des amplificateurs de puissance associés ($L_1$, $L_2$) dont les entrées communiquent avec des seconds multiplicateurs ($\pi_5$, $\pi_6$) qui reçoivent les signaux de sortie ($U_{H1}$, $U_{H2}$) de deux détecteurs de position de rotor (7) et des signaux d'entrées supplémentaires, les signaux d'entrée supplémentaires étant formés par des additionneurs ($\Sigma_1$, $\Sigma_2$, $\Sigma_3$) à partir des signaux de sortie des premiers multiplicateurs ($\pi_1$, $\pi_2$, $\pi_3$, $\pi_4$).

9. Système selon la revendication 8, caractérisé en ce qu'il comprend quatre détecteurs de position de rotor (7).

Fig. 1

Fig. 2

Fig. 3

Fig. 4

Fig. 5